Europäisches Patentamt

European Patent Office

Office européen des brevets

(19)

(11) Publication number: **0 187 871 B1**

(12) **EUROPEAN PATENT SPECIFICATION**
published in accordance with Art.
158(3) EPC

(45) Date of publication of patent specification: 26.06.91   (51) Int. Cl.⁵: **B25J 18/00**

(21) Application number: 85903705.3

(22) Date of filing: 23.07.85

(86) International application number:
PCT/JP85/00416

(87) International publication number:
WO 86/00847 (13.02.86 86/04)

(54) **INDUSTRIAL ROBOT HAVING VARIABLE ARM STRUCTURE.**

(30) Priority: 23.07.84 JP 151403/84

(43) Date of publication of application:
23.07.86 Bulletin 86/30

(45) Publication of the grant of the patent:
26.06.91 Bulletin 91/26

(84) Designated Contracting States:
DE GB

(56) References cited:
EP-A- 0 086 054    EP-A- 0 108 657
FR-A- 2 536 690    GB-A- 2 098 577
JP-A- 5 356 237    JP-A-57 189 794
JP-B- 5 147 953    JP-U-51 110 274
JP-Y- 5 228 289    US-A- 3 922 930

(73) Proprietor: FANUC LTD.
3580, Shibokusa Aza-Komanba, Oshino-mura
Minamitsuru-gun, Yamanashi 401-05(JP)

(72) Inventor: NAKASHIMA, Seiichiro
5-3-2, Hino-honcho Hino-shi
Tokyo 191(JP)
Inventor: TOYODA, Kenichi
1-17-25, Shinmei Hino-shi
Tokyo 191(JP)
Inventor: TORII, Nobutoshi
Fuyo Haitsu 308 65-4, Takakura-cho,
Hachioji-shi
Tokyo 192(JP)
Inventor: TERADA, Akihiro
5-46-13-305, Nishihirayama Hino-shi
Tokyo 191(JP)
Inventor: MIZUNO, Hitoshi Fanuc Hino
Shataku 307
3-27, Tamadaira, Hino-shi
Tokyo 191(JP)

(74) Representative: Jackson, Peter Arthur et al
Gill Jennings & Every, 53-64 Chancery Lane
London WC2A 1HN(GB)

## Description

Industrial Robot Having Detachable Arm Structure

The present invention relates to an industrial robot for painting and welding work, and more particularly, to an industrial robot having a detachable arm structure provided with joining mechanisms and capable of being exchanged, when required, for another similar detachable arm structure having a different length.

Various industrial robots are used in practice for saving labor in painting and welding work. In these industrial robots, a robot forearm is joined pivotally to the upper end of a robot upper arm pivotally joined to a robot body so as to extend upward, and a robot wrist constructed so as to hold a robot work unit, such as a spray gun or a welding head, is joined to the forepart of the robot forearm. The industrial robot of such a construction is capable of moving the robot work unit away from or toward the robot body within a fixed range by swinging the robot upper arm and the robot forearm. However, when the respective effective lengths of the robot upper arm and the robot forearm are fixed, the range of motion of the robot work unit with respect to the robot body fixedly installed at a fixed position is accordingly limited. Accordingly, it is desired that the robot upper arm and/or the robot forearm be exchangeable for another robot upper arm and/or another robot forearm having a different arm length, when the scope of robot work is limited within a specific range near to or remote from the fixedly installed robot body, and hence it is necessary to provide a robot arm capable of meeting such a desire and having a stable construction.

Accordingly, it is an object of the present invention to provide an industrial robot having a detachable robot arm capable of being exchanged for another similar robot arm having a different arm length suitable for operating the robot work unit within a specific working range.

EP-A-0108657 discloses a robot arm incorporating replaceable articulations.

EP-A-0086054 discloses an industrial robot having an arm structure which comprises an elbow unit including outer, intermediate and inner tubular members coaxially fitting one within another with transmission gears provided on the respective rear ends of the tubular members for transmitting rotation thereto; a hollow arm unit including outer, intermediate and inner pipe members coaxially fitting one within another and joined by first connecting means at the rear ends thereof to the front ends of respective ones of the tubular members of the elbow unit; and a wrist driving unit including outer, intermediate and inner tubular members coaxially fitting one within another and joined by second connecting means at the rear ends thereof to the front ends of respective ones of the pipe members of the hollow arm unit with transmission gears provided on the respective front ends of the intermediate and inner tubular members of the wrist driving unit for transmitting rotation to a wrist, and, according to the invention, such a robot is characterised in that the first connecting means comprises bolts bolting together adjacent ends of the outer tubular member of the elbow unit and of the outer pipe member of the hollow arm unit, and complementary axially extending pins and receiving holes for non-rotatively interconnecting the adjacent ends of the intermediate and inner tubular members of the elbow unit and of the pipe members of the hollow arm unit when they are brought axially together; and the second connecting means comprising bolts bolting together adjacent ends of the outer tubular member of the wrist driving unit and of the outer pipe member of the hollow arm unit, and complementary axially extending pins and receiving holes for non-rotatively interconnecting the adjacent ends of the intermediate and inner tubular members of the wrist driving unit and of the pipe members of the hollow arm unit when they are brought axially together; whereby the hollow arm unit can be readily detached from the elbow unit and wrist driving unit, by removing the bolts for replacement by a similar hollow arm unit of different length.

In the accompanying drawings:-

Figure 1 is a diagrammatic illustration of a detachable arm structure for an industrial robot according to the present invention, showing the constitution of the detachable arm structure; and

Figure 2 is a perspective view showing the general appearance of an exemplary industrial robot incorporating the detachable arm structure of Fig. 1.

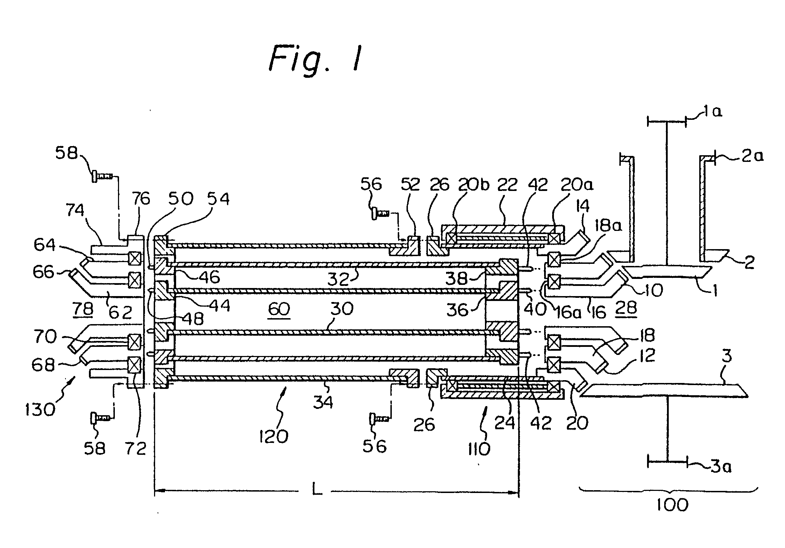

Referring to Fig. 1, a detachable robot arm structure of the present invention comprises a robot elbow unit 110 to be joined to a robot joint 100, a hollow robot arm unit 120 and a wrist driving unit 130. The robot joint 100 joins the robot arm structure of the present invention to a robot body or, when the robot arm structure of the present invention is employed as a robot forearm, joins the robot arm structure to a robot upper arm pivotally joined to the robot body. The robot joint 100 has a transmission mechanism comprising bevel gears or the like for transmitting the rotation of a driving source, such as a motor, provided on the robot body or on the robot upper arm, transmitted thereto through a belt-and-pulley mechanism or a chain-and-sprocket mechanism to the robot arm structure. In the embodiment shown in Fig. 1, the robot joint 100 has three bevel gears 1, 2, and 3 for transmitting rotative force. The rotation of the rotative driving source is transmitted through pulleys or sprockets 1a, 2a, and 3a to the bevel gears 1, 2, and 3, respectively.

The robot elbow unit 110 has three tubular members 16, 18, and 20 coaxially fitting one within another so as to be rotatable about a common axis of rotation. The tubular members 16, 18 and 20 are provided with three bevel gears 10, 12, and 14 at the respective rear ends, respectively, through which rotation is transmitted to the robot elbow unit 110 from the transmission mechanism of the robot joint 100. The inner tubular member 16 is supported rotatably in an antifriction bearing 16a on the intermediate tubular member 18, the intermediate tubular member 18 is supported rotatably in an antifriction bearing 18a on the outer tubular member 20, while the outer tubular member is supported rotatably in antifriction bearings 20a and 20b on a case 22. A coupling means capable of detachably coupling the hollow robot arm unit 120 and the robot elbow unit 110 by a pin joint is formed in the front end, i.e. the end opposite the rear end provided with the bevel gear, of each of the inner tubular member 16 and the intermediate tubular member 18. The outer tubular member 20 is connected fixedly to a flange 26 by means of a tubular connecting member 24. The hollow robot arm unit 120 is fastened to the flange 26 with bolts. Thus, the robot elbow unit 110 is an individual assembly comprising the tubular members 16, 18, and 20 coaxially fitting one within another, the case 22, the tubular connecting member 24, the flange 26 and the bevel gears 10, 12, and 14, and having a central hollow passage 28.

The hollow robot arm unit 120 is an assembly comprising an inner pipe 30, an intermediate pipe 32, and an outer pipe 34. The arm length L of the hollow robot arm unit 120 is decided selectively according to a required operating range of robot work. A plurality of hollow robot arm units having a similar construction and different arm lengths, respectively, are prepared beforehand for the selective use of a hollow robot arm unit having an arm length suitable for the required operating range of robot work. The pipes 30, 32 and 34 fit coaxially one within another. Hollow flanges 36 and 38 are provided on one end of the inner pipe 30 and on one end of the intermediate pipe 34, respectively. Connecting pins 40 and 42 are projected from the respective end faces of the hollow flanges 36 and 38 facing the tubular members 16 and 18, respectively. The connection of the hollow robot arm unit 120 to the robot elbow unit 110 is completed when the connecting pins 40 and 42 are received in the receiving holes formed in the respective joining ends of the tubular members 16 and 18, respectively. Different from the embodiment illustrated in Fig. 1, the connecting pins 40 and 42 may be provided on the tubular members 16 and 18 of the robot elbow unit 110 and the receiving holes may be formed in the hollow flanges 36 and 38 so as to coincide with the connecting pins 40 and 42, respectively. Similar flanges 44 and 46 are provided on the other ends of the inner pipe 30 and the intermediate pipe 32 and connecting pins 48 and 50 are projected from the flanges 44 and 46, respectively, for connecting the wrist driving unit 130 to the hollow robot arm unit 120.

On the other hand, connecting flanges 52 and 54 are provided on the opposite ends of the outer pipe 34. The flange 52 and the connecting pins 40 and 42 cooperatively join the hollow robot arm unit 120 to the robot elbow unit 110; the hollow robot arm unit 120 is joined firmly to the robot elbow unit 110 by fastening the flange 52 to the opposite flange 26 with bolts 56. The axial length of the outer pipe 34 is smaller than those of the inner pipe 30 and the intermediate pipe 34 owing to the connecting configuration of the robot elbow unit 110 and the hollow robot arm unit 120. The other flange 54 of the outer pipe 34 is used for connecting the wrist driving unit 130 to the hollow robot arm unit 120 with bolts 58. A hollow chamber 60 formed in the central portion of the interior of the inner pipe 30 of the hollow robot arm unit 120 communicates with the hollow chamber 28 of the robot elbow unit 110 and is available for wiring or piping.

The wrist driving unit 130 comprises an inner tubular member 62 and an intermediate tubular member 64 which are connected to the inner pipe 30 and the intermediate pipe 34 with the connecting pins 48 and 50, respectively. Receiving holes for receiving the connecting pins 48 and 50 are formed in the rear ends of the tubular members 62 and 64, respectively. Bevel gears 66 and 68 are formed on the front ends of the tubular members 62 and 64 to transmit the rotation transmitted thereto through the hollow robot arm unit 20 to a robot wrist, not shown in Fig. 1, and to drive the same. The inner tubular member 62 is supported for rotation relative to the intermediate tubular member 64 in an antifriction bearing 70 on the intermediate tubular member 64, and the intermediate tubular member 64 is supported for rotation relative to a case 74 in an antifriction bearing 72 on the case 74. A flange 76 formed in the case 74 is used for connecting the wrist driving unit 130 to the flange 54 with bolts 58. Thus, the wrist driving unit 130 is an individual assembly to be joined to the hollow robot arm unit 120 by means of the connecting pins and the bolts and has a through hole 78 which communicates with the hollow chamber 60 of the hollow robot arm unit 120 when the same is joined to the hollow robot arm unit 120. Cables and/or tubes passed through the hollow robot arm unit 120 are introduced into the robot wrist, not shown, through the through hole 78.

The robot arm structure of the above-mentioned construction according to the present invention is effectively applicable, mainly as a robot forearm, to a painting robot or a welding robot, in which the central portion of the interior of the robot arm structure is available as a space for wiring and piping. Furthermore,

EP 0 187 871 B1

selectively employing a hollow robot arm unit 120 comprising an inner pipe 30, an intermediate pipe 32, and an outer pipe 34 each having a suitable length among a plurality of hollow robot arm units having the same construction and different lengths corresponding to the distances between the robot body installed at a fixed position and working ranges, respectively, enables the robot arm structure to function properly. Still further, the hollow robot arm unit can be exchanged for another hollow robot arm unit very simply when the hollow robot arm units are provided with standardized connecting pins and fastening bolts.

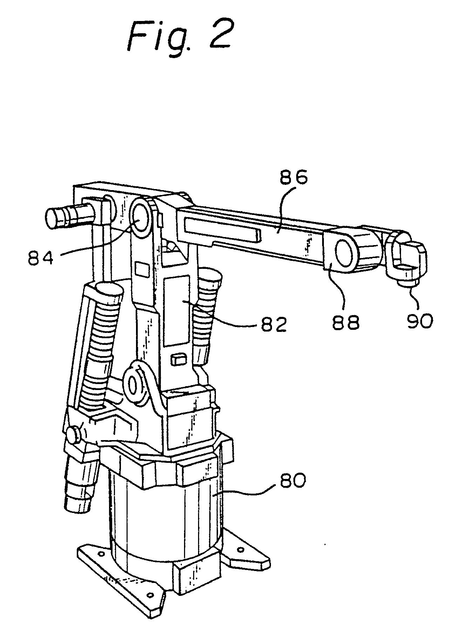

Figure 2 illustrates an exemplary industrial robot according to the present invention, employing the above-mentioned robot arm structure. This industrial robot comprises a robot body 80, a robot upper arm 82, a joint 84, a robot forearm 86, a robot wrist 88, and a robot work unit 90; the robot arm structure illustrated in Fig. 1 is detachably incorporated into the industrial robot as the robot forearm 86.

As apparent from the above description, according to the present invention, a robot arm structure having a suitable arm length can be selectively and adaptively employed when the distance between the robot body installed at a fixed position and a specific working range is changed, and hence a single industrial robot is adaptable to a plurality of production lines in an automated plant.

4

EP 0 187 871 B1

LIST OF REFERENCE CHARACTERS

| | | | |
|---|---|---|---|
| 1 ... Bevel gear | | 2 ... Bevel gear | |
| 3 ... Bevel gear | | 1a ... Pulley or sprocket | |
| 2a ... Pulley or sprocket | | 3a ... Pulley or sprocket | |
| 10 ... Bevel gear | | 12 ... Bevel gear | |
| 14 ... Bevel gear | | 16 ... Inner tubular member | |
| 18 ... Intermediate tubular member | | 20 ... Outer tubular member | |
| 16a ... Antifriction bearing | | 18a ... Antifriction bearing | |
| 20a ... Antifriction bearing | | 20b ... Antifriction bearing | |
| 22 ... Case | | 24 ... Tubular connecting member | |
| 26 ... Flange | | 28 ... Hollow passage | |
| 30 ... Inner pipe | | 32 ... Intermediate pipe | |
| 34 ... Outer pipe | | 36 ... Hollow flange | |
| 38 ... Hollow flange | | 40 ... Connecting pin | |
| 42 ... Connecting pin | | 44 ... Flange | |
| 46 ... Flange | | 48 ... Connecting pin | |
| 50 ... Connecting pin | | 52 ... Flange | |
| 54 ... Flange | | 56 ... Bolt | |
| 58 ... Bolt | | 60 ... Hollow chamber | |
| 62 ... Inner tubular member | | 64 ... Intermediate tubular member | |
| 66 ... Bevel gear | | 68 ... Bevel gear | |
| 70 ... Antifriction bearing | | 72 ... Antifriction bearing | |
| 74 ... Case | | 76 ... Flange | |
| 78 ... Through hole | | 80 ... Robot body | |
| 82 ... Robot upper arm | | 84 ... Robot joint | |
| 86 ... Robot forearm | | 88 ... Robot wrist | |
| 90 ... Robot work unit | | 100 ... Robot joint | |
| 110 ... Robot elbow unit | | 120 ... Hollow robot arm unit | |
| 130 ... Wrist driving unit | | | |

**Claims**

1. An industrial robot having an arm structure which comprises an elbow unit (110) including outer, intermediate and inner tubular members (20,18,16) coaxially fitting one within another with transmission gears (14,12,10) provided on the respective rear ends of the tubular members for transmitting rotation

5

thereto; a hollow arm unit (120) including outer, intermediate and inner pipe members (34,32,30) coaxially fitting one within another and joined by first connecting means (56,42,40) at the rear ends thereof to the front ends of respective ones of the tubular members of the elbow unit; and a wrist driving unit (130) including outer, intermediate and inner tubular members (74,64,62) coaxially fitting one within another and joined by second connecting means (58,50,48) at the rear ends thereof to the front ends of respective ones of the pipe members of the hollow arm unit with transmission gears (68,66) provided on the respective front ends of the intermediate and inner tubular members (64,62) of the wrist driving unit for transmitting rotation to a wrist; characterised in that the first connecting means comprises bolts (56) bolting together adjacent ends of the outer tubular member (20) of the elbow unit and of the outer pipe member (34) of the hollow arm unit, and complementary axially extending pins and receiving holes for non-rotatively interconnecting the adjacent ends of the intermediate and inner tubular members (18,16) of the elbow unit and of the pipe members (32,30) of the hollow arm unit when they are brought axially together; and the second connecting means comprising bolts (58) bolting together adjacent ends of the outer tubular member (74) of the wrist driving unit and of the outer pipe member (34) of the hollow arm unit, and complementary axially extending pins and receiving holes for non-rotatively interconnecting the adjacent ends of the intermediate and inner tubular members (64,62) of the wrist driving unit and of the pipe members (32,30) of the hollow arm unit when they are brought axially together; whereby the hollow arm unit (120) can be readily detached from the elbow unit (110) and wrist driving unit (130), by removing the bolts (56,58) for replacement by a similar hollow arm unit of different length.

2. An industrial robot according to claim 1, wherein the transmission gears (14,12,10,68,66) are bevel gears.

3. An industrial robot according to claim 1 or claim 2, in which each of the pipe members (34,32,30) has a hollow flange (52,54,38,46,36,44) at each end.

**Revendications**

1. Robot industriel comportant une structure de bras qui comprend un bloc de coude (110), constitué de pièces tubulaires extérieure, intermédiaire et intérieure (20, 18, 16) s'emboîtant de manière coaxiale l'une dans l'autre, des roues d'engrenage de transmission (14, 12, 10) étant prévues sur les extrémités arrière respectives de ces pièces tubulaires en vue de transmettre une rotation à ces dernières ; un bloc de bras creux (120), constitué d'éléments de tube extérieur, intermédiaire et intérieur (34, 32, 30) s'emboîtant de manière coaxiale l'un dans l'autre et réunis par de premiers moyens de liaison (56, 42, 40), disposés à leurs extrémités arrière, aux extrémités avant de pièces tubulaires respectives du bloc de coude, et un bloc d'entraînement de poignet (130), constitué de pièces tubulaires extérieure, intermédiaire et intérieure (74, 64, 62) s'emboîtant de manière coaxiale l'une dans l'autre et réunies par de seconds moyens de liaison (58, 50, 48), disposés à leurs extrémités arrière, aux extrémités avant d'éléments de tube respectifs du bloc de bras creux, des roues d'engrenage de transmission (68, 66) étant prévues sur les extrémités avant respectives des pièces tubulaires intermédiaire et intérieure (64, 62) de ce bloc d'entraînement de poignet afin de transmettre une rotation à un poignet, caractérisé en ce que les premiers moyens de liaison comprennent des boulons (56), boulonnant entre elles des extrémités adjacentes de la pièce tubulaire extérieure (20) du bloc de coude et de l'élément de tube extérieur (34) du bloc de bras creux, et des tétons et trous de logement, complémentaires et s'étendant axialement, permettant une liaison mutuelle non-rotative des extrémités adjacentes des pièces tubulaires intermédiaire et intérieure (18, 16) du bloc de coude et des éléments de tube (32, 30) du bloc de bras creux lorsqu'ils sont assemblés axialement ; et en ce que les second moyens de liaison comprennent des boulons (58), boulonnant entre elles des extrémités adjacentes de la pièce tubulaire extérieure (74) du bloc d'entraînement de poignet et de l'élément de tube extérieur (34) du bloc de bras creux, et des tétons et trous de logement, complémentaires et s'étendant axialement, permettant une liaison mutuelle non-rotative des extrémités adjacentes des pièces tubulaires intermédiaire et intérieure (64, 62) du bloc d'entraînement de poignet et des éléments de tube (32, 30) du bloc de bras creux lorsqu'ils sont assemblés axialement, de sorte qu'on peut facilement séparer le bloc de bras creux (120) du bloc de coude (110) et du bloc d'entraînement de poignet (130), en retirant les boulons (56, 58), en vue de le remplacer par un bloc de bras creux analogue, de longueur différente.

2. Robot industriel suivant la revendication 1, dans lequel les roues d'engrenage de transmission (14, 12, 10, 68, 66) sont des roues coniques d'engrenage.

3. Robot industriel suivant la revendication 1 ou 2, dans lequel chacun des éléments de tube (34, 32, 30) comporte une bride creuse (52, 54, 38, 46, 36, 44) à chaque extrémité.

**Ansprüche**

1. Industrieller Roboter mit einer Armstruktur, die eine Ellenbogeneinheit (110) umfaßt, die äußere , zwischenliegende und innere rohrförmige Elemente (20, 18, 16) umfaßt, die koaxial ineinander eingepaßt sind und an ihren jeweiligen rückwärtigen Enden zur Drehbewegungsübertragung mit Getrieberädern (14, 12, 10) versehen sind; mit einer Hohlarmeinheit (120), die äußere, zwischenliegende und innere Rohrelemente (34, 32,30) umfaßt, die koaxial ineinander eingepaßt sind und mit ihren rückwärtigen Enden mittels erster Verbindungsmittel (56, 42, 40) mit den vorderen Enden der jeweiligen rohrförmigen Elemente der Ellenbogeneinheit verbunden sind; mit einer Handgelenkantriebseinheit (130), die äußere, zwischenliegende und innere rohrförmige Elemente (74, 64, 62) umfaßt, die koaxial ineinander eingepaßt sind und mit ihren rückwärtigen Enden mittels zweiter Verbindungsmittel (58, 50, 48) mit den vorderen Enden der jeweiligen Rohrelemente der Hohlarmeinheit verbunden sind, mit Getrieberädern (68, 66) an den jeweiligen Vorderenden des zwischenliegenden und des inneren rohrförmigen Elements (64, 62) der Handgelenkantriebseinheit zur Drehbewegungsübertragung auf ein Handgelenk, dadurch gekennzeichnet, daß die ersten Verbindungsmittel Bolzen (56) umfassen, die aneinandergrenzende Enden des äußeren rohrförmigen Elements (20) der Ellbogeneinheit und des äußeren Rohrelements (34) der Hohlarmeinheit miteinander verschrauben sowie ergänzend in axialer Richtung verlaufende Zapfen und Aufnahmeöffnungen zur drehfesten Verbindung der angrenzenden Enden der zwischenliegenden und inneren rohrförmigen Elemente (18, 16) der Ellbogeneinheit und der Rohrelemente (32, 30) der Hohlarmeinheit, wenn diese axial zusammengebracht werden, und daß die zweiten Verbindungsmittel Bolzen (58) umfassen, die aneinandergrenzende Enden des äußeren rohrförmigen Elements (74) der Handgelenkantriebseinheit und des äußeren Rohrelements (34) der Hohlarmeinheit miteinander verschrauben, sowie zusätzlich sich in axialer Richtung erstreckende Zapfen und Aufnahmeöffnungen zur drehfesten Verbindung der aneinandergrenzenden Enden der zwischenliegenden und inneren rohrförmigen Elemente (64, 62) der Handgelenkantriebseinheit und der Rohrelemente (32, 30) der Hohlarmeinheit, wenn diese axial zusammengebracht werden, derart, daß die Hohlarmeinheit (120) leicht von der Ellenbogeneinheit (110) und der Handgelenkantriebseinheit (130) durch Entfernen der Bolzen (56, 58) gelöst und durch eine ähnliche Hohlarmeinheit unterschiedlicher Länge ersetzt werden kann.

2. Industrieller Roboter nach Anspruch 1, dadurch gekennzeichnet, daß die Getriebezahnräder (14, 12, 10, 68, 66) Kegelräder sind.

3. Industrieller Roboter nach Anspruch 1 oder 2, dadurch gekennzeichnet, daß jedes der Rohrelemente (34, 32, 30) an jedem Ende einen Hohlflansch (52, 54, 38, 46, 36, 44) aufweist.

Fig. 1

EP 0 187 871 B1

# Fig. 2